# EUROPEAN PATENT APPLICATION

(11) **EP 1 548 557 A1**
(43) Date of publication of application: **29.06.2005**
(21) Application number: 04030279.6
(22) Date of filing: 21.12.2004
(51) Int. Cl.: G06F 3/033, G06F 17/60

(54) **System and method for bill payment**

(30) Priority: 22.12.2003 US 707570
(71) Applicant: PITNEY BOWES INC., Stamford, CT 06926-0700 (US)
(72) Inventor: Kissner, Matthew S., Scarsdale NY 10583 (US); Coffy, Jean-Hiram, Norwalk CT 06854 (US); Euchner, James A., Waccabuc NY 10597 (US); Parkos, Arthur J., Southbury CT 06468 (US)
(74) Representative: HOFFMANN - EITLE

(57) **Abstract**

Systems and methods for digital paper bill presentment and digital pen bill payment are described. An intermediary provides a central billing clearinghouse service to businesses that is used to prepare and deliver digital paper bills and process payments that are authorized using a digital pen. Consumers register a digital pen with the intermediary and then use the digital pen and digital paper bill to electronically authorize bill payment. Some of the bills include complete billing information while others are aggregated bills that include only bill totals.

## Description

The illustrative embodiments described in the present application are useful in systems including those for the presentment and payment of bills and more particularly are useful in systems including those for digital paper bill presentment and electronic bill payment.

Consumers purchase goods and/or services from many different businesses, merchants, vendors and utilities. Often, the consumer does not immediately pay for the purchases. Sometimes the consumer does pay immediately, but uses a credit or charge account. The merchant, vendor, utility or creditor later submits a bill to the consumer requesting payment for the goods and/or services received. The typical bill is sent monthly and aggregates all transactions for the consumer for the billing period. The consumer then writes an appropriate check drawn on a bank account and sends it to the merchant. The merchant then deposits the check and credits the consumer for the amount of payment received.

Traditional paper bill presentment and physical check payment is an expensive, cumbersome, and lengthy process. It is expensive to print the bill, mail the bill and to process paper checks. It takes time for the consumer to receive the physical bill and it takes time for the merchant to receive payment from the consumer.

Electronic Bill Presentment and Payment (EBPP) systems typically provide a lower cost billing solution than a traditional physical paper billing system. Typical businesses send physical paper billing statements to each customer unless the particular customer has agreed to receive electronic statements. People who have agreed to have their bills presented electronically have a tendency to also pay the bill electronically. Although merchants find EBPP solutions attractive from a cost perspective, consumers have not universally accepted such systems. Furthermore, in some billing sectors, acceptance of EBPP processes is very low.

EBPP systems offer merchants potential cost saving opportunities, collection efficiencies and marketing options. The traditional paper-based process involves statement creation, distribution, and customer payment submission. The process also includes accounts receivable processing for payments made by check or credit card, and payment-clearing activities before the merchant is provided access to the payment funds.

However, many consumers are comfortable with the existing paper-based processes and have created their own bill management practices and payment solutions. Furthermore, a consumer does not have to own or have access to a computer and communications network connection to pay bills using the traditional paper-based approach. The typical EBPP system requires a user to have a banking account that may be used to process electronic payments, an Internet access account and a computer.

At least one system has been described that accounts for a user preference for physical paper bill presentment. A system for electronic and physical mass mailing is described in United States Patent Number 6,343,327, issued on January 29, 2002, to Daniels, Jr., et al. The system described therein separates documents into a physical delivery printstream and an electronic delivery printstream based on delivery preferences stored in a database.

Accordingly, the prior art does not provide a bill presentment and payment system that allows for the billing recipient to receive paper-based bills and maintain much of their traditional bill payment practices while providing the convenience and cost savings of electronic processes.

The illustrative embodiments described herein overcome the disadvantages of the prior art by providing a method and system for digital paper bill presentment and payment. In one illustrative embodiment, an intermediary provides a central billing clearinghouse system for businesses that is used to prepare and deliver digital paper bills and process payments authorized using a digital pen. Consumers register with the intermediary and receive a digital pen that is then used with the digital paper bill to electronically authorize bill payment. Optionally, only a portion of the bill utilizes digital paper. The bill payment authorization process optionally utilizes biometric information gathered by the digital pen. The bills may include complete billing data or may include only a subset of billing data such as a summary and total amount due. In an alternative illustrative embodiment, an individual business provides a digital paper bill presentment system and an intermediary processes payment requests.

In yet another illustrative embodiment of the application, a billing intermediary provides for consolidated bill presentment using digital paper. As with the systems described above, the bills may include complete billing data or only a subset of billing data such as a summary and total amount due.

FIG. 1 is a schematic representation of a digital paper bill presentment and electronic payment system with an intermediary according to an illustrative embodiment of the present application.

FIG. 2 is a flow chart showing a process for presenting a digital paper bill and receiving an electronic payment using a digital pen according to an illustrative embodiment of the present application.

FIG. 3 is a flow chart showing a process for producing a digital paper bill according to an illustrative embodiment of the present application.

FIG. 4 is a schematic representation of a digital paper bill presentment and electronic payment system according to another illustrative embodiment of the present application.

FIG. 5 is a schematic representation of an aggregated digital paper bill presentment and electronic payment system with an intermediary according to another illustrative embodiment of the present application.

FIG. 6 is a schematic representation of an illustrative digital paper bill according to the illustrative embodiments of the present application.

FIG. 7 is a schematic representation of an illustrative digital paper bill providing dispute automation according to the illustrative embodiments of the present application.

FIG. 8 is a schematic representation of an illustrative aggregate digital paper bill according to another illustrative embodiment of the present application.

Illustrative embodiments describing systems and methods for digital paper bill presentment and payment are described. The illustrative embodiments are described with reference to particular types of bills, but the system may be used with any type of bill.

The illustrative embodiments of the present application describe systems and methods that allow businesses to collect payments from their customers using digital paper presentment and digital pen payment authorization. In one embodiment, an intermediary provides a Central Billing Clearinghouse Service for merchants and consumers. The Central Billing Service acts as a trusted third party. The customers do not provide banking details to each merchant, but rather provide those details to the one intermediary that processes electronic payment transactions for each merchant.

The merchants enter a billing system agreement with the Central Billing Service to service digital paper bills. The Billing Service receives billing data from a merchant and then prepares and sends digital paper billing statements to the appropriate consumers. The consumer registers with the Billing Service and provides bank account information associated with a merchant account and a digital pen. The consumer later uses a cellular phone and the digital pen to request that a payment be made. The Billing Service arranges to have data routed from the cellular service and when it receives the payment request from the consumer, it sends the payment request to the appropriate bank as indicated by the consumer during the registration process. Accordingly, the consumers receive a paper bill, yet they are able to make an electronic bill payment using a digital pen.

Digital pens typically capture handwriting or pen strokes that the user writes on a medium such as a piece of paper. The systems often use a co-located processor such as a personal computer to process pen strokes. Some digital pen systems utilize an imaging device to scan or record an image of a pen stroke. Other digital pens use mechanical sensors or infrared (IR) scanning systems in order to determine an absolute or relative position of the pen. The ANOTO digital paper and pen system is available from Anoto AB of Sweden. The ANOTO system uses the Sony-Ericsson CHA-30 CHATPEN and ANOTO digital pattern paper. The illustrative embodiments described herein utilize an ANOTO system with a Chatpen including a Bluetooth transceiver for communication with a local cellular telephone or other local processor.

The Anoto digital paper includes a pattern that enables unique pattern locations to be detected when a user writes on the digital paper with the digital pen. For example, a position on the pattern may be associated with a unique two-dimensional coordinate position. The unique pattern location can be used to identify a target back-end application to receive the pen strokes and may also be used to identify a particular piece of digital paper. Furthermore, the Chatpen provides additional data including pressure, speed and pen attitude. The additional information includes biometric information that may be used to identify or authenticate a user. Such digital paper may be associated with a consumer or a particular bill.

One of the advantages provided by the illustrative embodiments is that the customer would not have to change her traditional paper-based payment habits to receive the benefits of electronic payment. The systems described do not require that the user have a computer or an Internet account. The merchants using the system benefit from receiving streamlined payment processing and faster payment.

Accordingly, digital paper and pen technologies such as the Anoto Technology are combined with aspects of traditional EBPP systems to provide a hybrid approach that takes advantage of certain aspects of traditional paper technology and certain properties of digital communications technology.

Initially, a consumer who wished to enroll in a billing program using the illustrative embodiments described herein would obtain a Chatpen in the enrolment process. The consumer/customer could enroll online or by using an ANOTO enrollment form provided by her bank, merchant or the billing intermediary. The consumer is associated with the unique Chatpen serial number and optionally provides a biometric writing sample such as a signature. The enrollment confirmation is provided by mail or online.

In one embodiment, a paper bill is created and printed in whole or in part using an Anoto pattern. The digital paper bill is delivered to a consumer recipient who then reviews the bill. The recipient then approves payment directly on the bill using the Anoto pen. The payment authorization data is sent wirelessly or through the use of a wired docking station. The billing system authenticates the user of the pen using the pen information received at the merchant or intermediary system and if authorized, the system processes the appropriate payment amount from the customer's bank to the merchant or other biller.

Commonly owned, published U.S. patent application number 2003/0220871, published on November 27, 2003, describes customizable electronic bill presentment and payment systems and methods. The back-end bill presentment and payment systems described therein may be used with embodiments of the present application when configured for digital paper bill presentment and digital pen authorized payment. Alternatively, other known billing back-end development systems and payment processing systems may be utilized with each of the embodiments described herein.

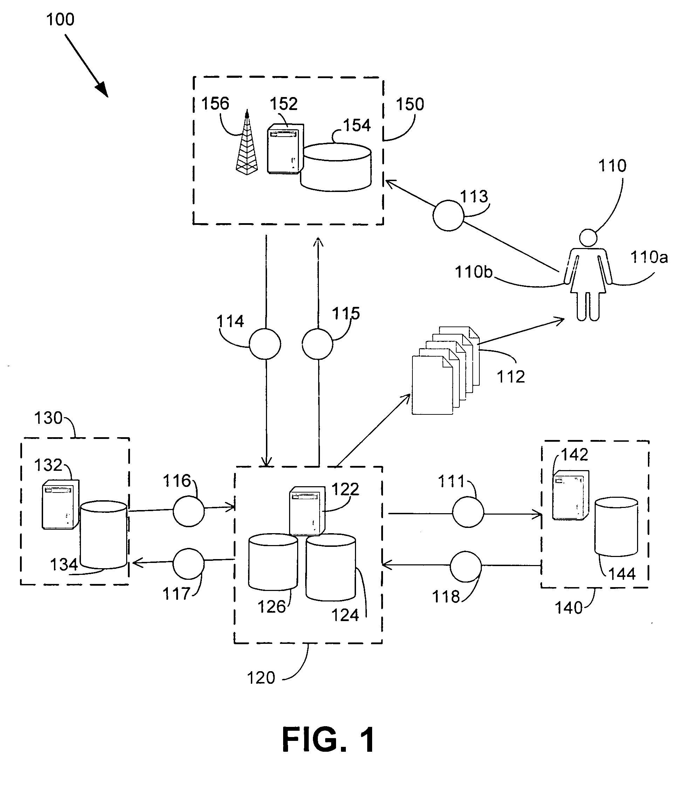

Referring to FIG. 1, an illustrative digital paper bill presentment and electronic payment system 100 with an intermediary according to an illustrative embodiment of the present application is shown.

A consumer or bill recipient 110 has an Anoto Chatpen digital pen 110a in one hand and a Bluetooth enabled cellular telephone 110b in the other hand. Digital Pen 110a includes a processor, memory, ink, a camera or image sensor, a battery and a Bluetooth transceiver. It also includes biometric sensors and provides feedback to a user by vibrating. Cellular telephone 110a includes a processor, memory, a cellular radio transceiver, a Bluetooth radio transceiver, a graphical display, keypad and audio input/output. Optionally, the cellular telephone includes a full QWERTY keyboard.

A Central Billing Service 120 includes an information processing infrastructure including servers 122 to host business logic systems. The billing service 120 includes a database for customer records, merchant records, bank records and telecommunications and cellular carrier records. The billing server 122 is connected to an Anoto Enterprise Pattern Look Up Service (EPLS) 126 that is used to recognize the Anoto pattern and provide a lookup and routing function. Additionally, the billing service includes a printing service (not shown) for printing bills using Anoto digital paper.

The Central Billing Service 120 is connected to a merchant system 140 using a secure communications channel 111, 118. Similarly, the Central Billing Service 120 is connected to a financial banking system 130 using a secure communications channel 116, 117. Additionally, the Billing Service 120 uses secure communications channel 114, 115 to connect to a communications provider such as cellular carrier system 150 that is part of the existing Cellular Network Infrastructure. The cellular carrier system 150 includes a server 152, database 154 and towers 156. It provides cellular service to the consumer 110 using the cellular communications channel 113. The Central Billing Service 120 arranges for the cellular carrier system 150 to host an application that processes data from the consumer cell phone and routes the Anoto based traffic 113 to the Central Billing Service 120.

The merchant or biller system 140 includes an information-processing infrastructure. A server 142 and database 144 are used for processing billing data and also communicate with the billing service 120. The exchange of customer statement and billing service responses are sent electronically 111, 118 and use XML-formatted documents for which schemas have previously been exchanged. Alternatively, the schema exchange may be done via a webservices system. After the Billing Service receives the appropriate billing data, the system is used to print hardcopy digital paper bills 112 that are mailed to the consumer 110. The printing function may be distributed to expedite delivery.

The Financial Banking System 130 includes a server 132 and database 134. In this illustrative embodiment, the Billing System 120 processes the consumer's 110 request to pay a bill from the merchant 120 using a bank account maintained with the bank 130. The Billing System 120 requests funds availability status from the bank 130 and then requests that the payment amount be sent to the merchant 140 from the consumer's 110 bank account.

Cellular telephone 110b is connected to cellular operator system 150. The embodiments described herein utilize a unique digital pen and a pin for purposes of authenticating a user. Since each Anoto pen has a unique ID, a token consisting of the three-tuple PEN_ID, PAGE_ID, and PIN is used to authenticate the consumer at the time of use. However, in an alternative, biometric data including the signature of the consumer 110 may be used for authentication purposes. The pen 110a then provides biometric data relating to the pen strokes used including hand speed, pen tip pressure and the inclination angle between pen and paper.

The customer uses a Bluetooth-enabled cell phone as a co-located processor and communications providor for the digital pen 110a. However, a PC and docking station could also be used. Consumers that register with the service or any new user may be provided an Anoto pen and a Bluetooth cell phone. If she already has a phone, she may receive the pen or the pen and a retrofit kit for her cell phone. The cell phone and pen may be paired for Bluetooth service when the consumer is enrolled in the service.

In an alternative, the digital pen includes a cellular radio transceiver and a user interface including a display and audio input/output. Other communications channels may be used including both local Bluetooth access points and satellite wireless communications. In another alternative, a PDA, laptop or other handheld processor is used as a co-located processor to process digital pen information using a wireless link or a wired connection such as a docking station. The cellular telephone could also be used to provide a data link such as a GSM link. In yet another alternative, the cellular telephone could include additional processing capacity and could be used to capture and/or manipulate data.

The server processors are geographically and load balanced application servers using systems available from Sun Microsystems. The storage servers use multiple location redundant backup systems. Additionally, other appropriate wireless and wired networks and connections may be utilized. For example, it is contemplated that other communications channels such as T1 lines or other wired or wireless connections could be used. A Bluetooth identifier may be used as a unique identifier. Bluetooth systems do not generally require user intervention to connect to the Personal Area Network access point. Bluetooth utilizes several layers of security. However, other known security techniques including application layer security techniques may be used as well.

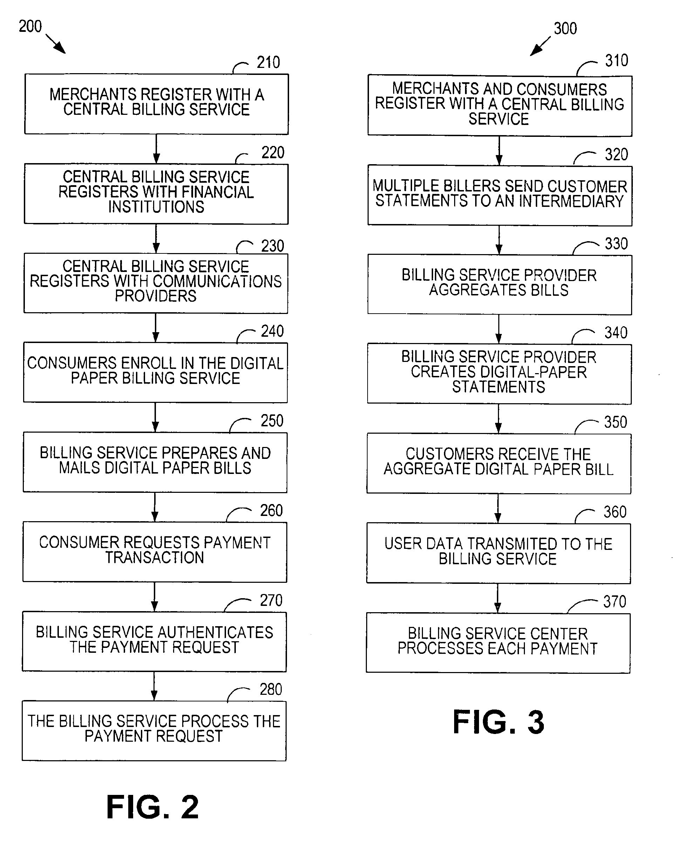

Referring to FIG. 2, a process 200 for presenting a digital paper bill and for receiving an electronic payment from a digital pen according to an illustrative embodiment of the present application is shown.

Initially, in step 210, merchants register with a central billing service. The service is used to provide digital paper bill presentment and to process digital pen payment requests. In a typical system, there will be several merchant systems and also several financial institution systems enrolled. Billing messages will be exchanged between these systems and the central billing service. These exchanges are made using XML-formatted data and schemas for the parties involved. Alternatively, the systems may utilize webservices or any appropriate means of exchange of data over IT networks. The merchant or billing company sends an appropriate database of customer records to the central billing service upon registration. After the initial registration is complete, the digital paper billing statements may follow at regular intervals.

Similarly, in step 220, the central billing service registers with the required financial institutions. The registration process includes all agreements and data transmission formatting required. Additionally, in step 230, the central billing service registers with the required communications providers including cellular telephone companies.

In step 240, consumers enroll in the digital paper billing service. The billing service, merchant, cellular operator an/or financial institution may enroll consumers. A typical consumer receives a cell-phone bundled with an Anoto pen or a retrofit kit if she already has a mobile phone. The phone and the pen are paired during enrolment using known shared secret challenge-response mechanisms to ensure the correct devices are paired and communicating properly. The consumer provides banking information to be used when paying bills with the digital pen. Optionally, the consumer provides a biometric writing sample such as a signature or sample phrase.

In step 250, the billing service provider assigns a unique page or a range of unique Anoto patterned pages to each consumer. The provider then receives bill data from a merchant and prints a corresponding billing statement for the particular consumer using the assigned unique Anoto pattern page. The digital paper bill is then mailed to the particular consumer.

In step 260, the consumer receives the statement and proceeds to request a payment transaction using a single check of her Anoto pen on the appropriate portion of the digital paper bill. When she sends the form data to the Billing Service Provider through the cell network using the Anoto protocol, the information is received by the cellular system and forwarded to the Billing Service Provider for further processing. Alternatively, the payment authorization/request may include a signature and/or a hand-written payment amount.

In step 270, the billing service authenticates the payment request. Each Anoto pen has a unique identifier and each Anoto pattern page has a unique page identifier. Each consumer establishes a Personal Identification Number (PIN) during enrolment in the system. Accordingly, since each Anoto pen has a unique ID, a token consisting of the tuple PEN_ID, PAGE_ID, and PIN can be used to authenticate the consumer at the time of use. This method of authentication verifies that the right pen is writing on the right pages by the right person. If a PIN is compromised, the billing service provider may remotely turn off the pen. Alternatively, other known authentication systems may be used.

In step 280, the billing service processes the payment request and communicates with the financial institutions and the merchants. The billing service determines the status of the customers account and determines funds availability using a pre-determined communications protocol and relationship. The billing service then requests payment from the customer's financial institution. If the payment is cleared, the financial institution transfers the appropriate funds to the appropriate merchant account.

Referring to FIG. 3, a process 300 for producing a digital paper bill according to an illustrative embodiment of the present application is shown.

In step 310, several billers, customers and financial institutions are registered with a central billing service center. In step 320, several billers send customer statements to an intermediary billing service provider electronically. In step 330, the billing service provider aggregates bills from several billers for a particular consumer.

In step 340, the billing service provider acts as Anoto Enterprise Pattern Look-Up Service (EPLS) and a certified Anoto printer. The billing service provider prints the aggregate statement on Anoto-patterned paper to create digital-paper statements that are then mailed to customers.

In an alternative in which bills are not aggregated, individual billers could print customer bills with the Anoto pattern using a system provided to them by the billing service provider. The billing service provider then acts as a trusted third party to process only the payment requests authorized using digital pens.

In step 350, customers receive the aggregate digital paper bill and decide when to pay each particular bill. The customer uses the Anoto pen to pay each bill at a particular time. In an alternative, the customer may write in a payment amount using the Anoto pen and digital paper.

In step 360, the Anoto pen transmits the bill payment authorization data to the billing service center after the digital pen is docked in a cradle that is connected to a PC through a USB cable. In step 370, the billing service center processes each payment. The billing center then notifies the merchant/biller of the payment and provides the consumer with a receipt.

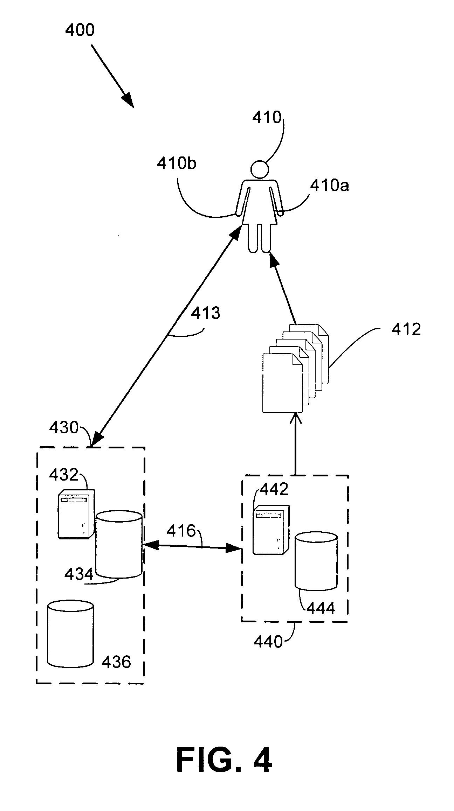

Referring to FIG. 4, a digital paper bill presentment and electronic payment system 400 according to another illustrative embodiment of the present application is shown.

A consumer or bill recipient 410 has an Anoto Chatpen digital pen 410a in one hand and a Bluetooth enabled cellular telephone 410b in the other hand. The Cellular telephone 110a transfers digital pen commands to a banking system 430 using a secure cellular telephone connection 413.

The banking service 430 includes a database 434 for customer records, merchant records, bank records and telecommunications and cellular carrier records. The banking server 432 is connected to an Anoto Enterprise Pattern Look Up Service (EPLS) 436 that is used to recognize the Anoto patterns and provide a lookup and routing function. The merchant system 440, includes a server 442 and database 444. Additionally, the merchant system 440 includes a printing service (not shown) for printing bills using Anoto digital paper.

The digital paper bills 412 are then mailed to the consumer 410. The merchant system 440 also sends billing data to the banking system 430 using secure connection 416. When the consumer checks the pay bill box on the digital paper bill, payment authorization data is transferred to the banking system. The banking system 430 already has the data that is required to recognize and authenticate the payment request. If the request is authenticated, the banking system 430 ensures funds availability and makes the payment to merchant 440.

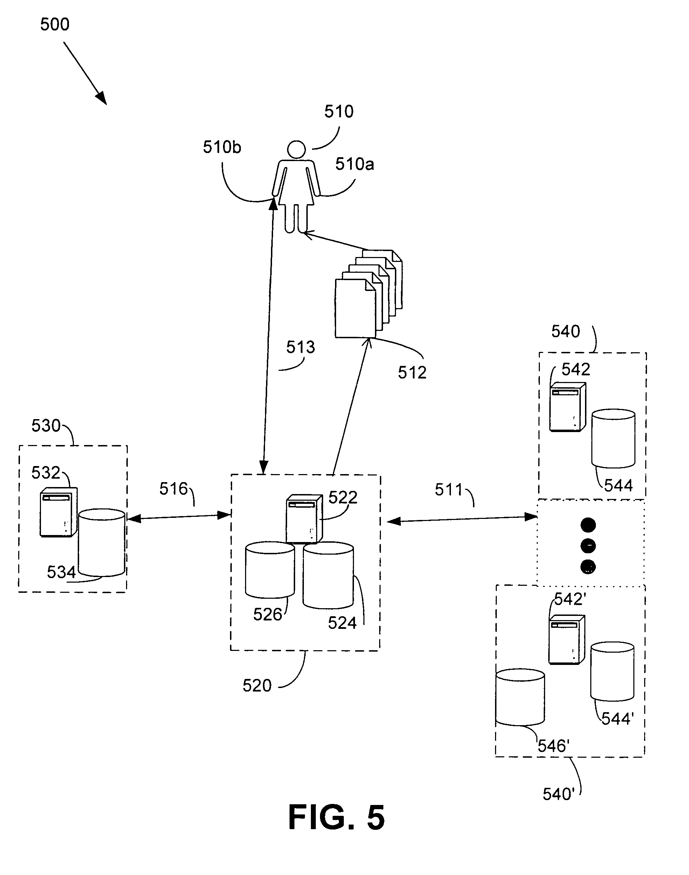

Referring to FIG. 5, an aggregated digital paper bill presentment and electronic payment system 500 with an intermediary according to another illustrative embodiment of the present application is shown.

A consumer 510 has an Anoto Chatpen digital pen 510a in one hand and a Bluetooth enabled cellular telephone 11 0b in the other hand. A Central Billing Service 520 includes servers 522 and database 524 for customer records, merchant records, bank records and telecommunications and cellular carrier records. The billing server 522 is connected to an Anoto Enterprise Pattern Look Up Service (EPLS) 526. Additionally, the billing service includes a printing service (not shown) for printing bills using Anoto digital paper.

The Central Billing Service 520 is connected to several merchant systems 540 - 540' using a secure communications channel 511. The service 520 is connected to a financial banking system 530 using a secure communications channel 516 and to consumers 510 using direct cellular telephone service 513. The merchant systems each include servers 542 and databases 544. The Financial Banking System 530 includes a server 532 and database 534. In this illustrative embodiment, the Billing System 520 consolidates several merchant bills into a single consolidated digital paper bill 512 that is delivered to the consumer 510.

The billing service 520 processes the consumer's 510 consolidated request to pay bills from the merchant 540 using a bank account maintained with the bank 530. The Billing System 520 apportions the payments and requests funds availability status from the bank and then requests that the payment amount be sent to each merchant 540 from the consumer's 510 bank account.

In another alternative embodiment, the merchant 540' creates and presents the digital paper bills. The merchant also acts as the Anoto EPLS service 546'. An intermediary service 520 is used to process the billing requests from the consumer 510 so that the consumer does not have to share banking information with each merchant. In such a system, the consumer 510 need only share banking information with one trusted third party intermediary 520.

In yet another alternative embodiment, the digital pen is linked to a checking account, typically using an ABA routing number with an account number and a check sequence number. Then, all pen payment activities are reported as regular checking account transactions. Additionally, the digital pen payment authorization transactions may be sent to a local personal accounting system such as QUICKEN. In another alternative, the digital pen is used to provide immediate feedback to the user if there are insufficient funds in the designated account.

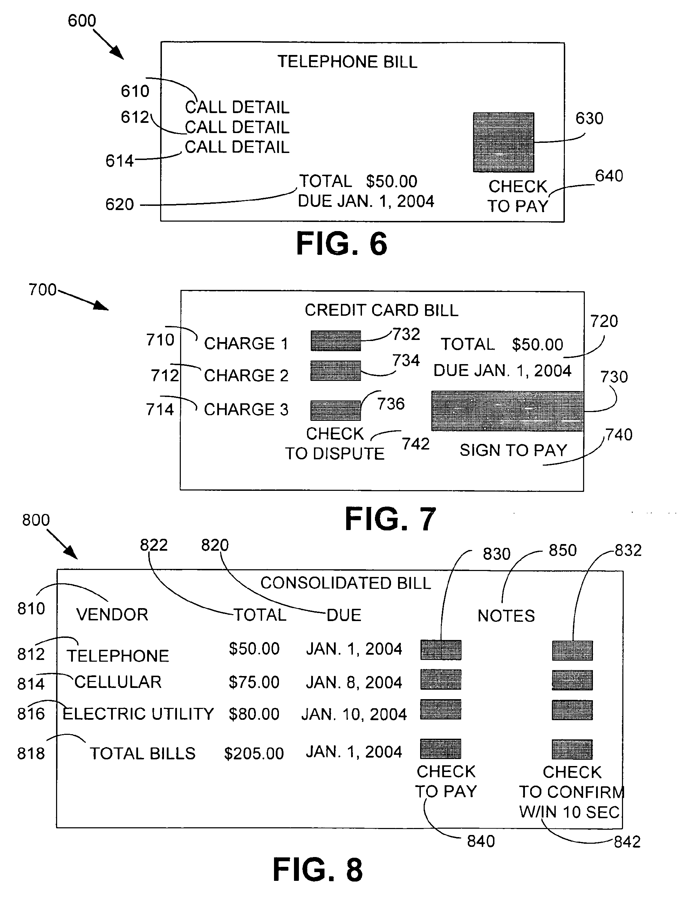

Referring to FIG. 6, an illustrative digital paper bill according to illustrative embodiments of the present application is shown.

Bill 600 is received from a telephone company and includes three detailed charges 610, 612 and 614. A total indicator 620 indicates the total amount due of 50.00 dollars and a due date of January 1, 2004. A check to pay indicator 640 indicates that the user should check the digital paper box 630 to authorize and initiate bill payment.

In an alternative embodiment, the co-located processor is used to track and trace the payment activity requested when the consumer checks the pay box. Transaction confirmation can be instantaneously received via the co-located processor access device whether it is a cellular phone or a PC.

In another alternative, the digital paper bill includes a digital paper box in which the user may handwrite a payment amount. The co-located processor may recognize the hand-written amount or may send pen stroke data to the billing center. Furthermore, the digital pen may be used to provide feedback to the consumer. For example, if there are insufficient funds for payment, the pen may vibrate.

Referring to FIG. 7, an illustrative digital paper bill providing dispute automation 700 according to the illustrative embodiments of the present application is shown.

In this embodiment, the consumer may dispute line item transactions by indicating a dispute by checking a dispute box on the bill. If the bill is a credit card bill from a company that requires written dispute letters, the intermediary system prepares a dispute letter from the bill data after it receives the bill dispute indication. An appropriate dispute letter is then sent to the credit card company. A dispute letter database contains the form dispute letter for each merchant, vendor or biller and an appropriate script with any special instructions. If appropriate, the letter is sent by facsimile.

The bill 700 is received from a credit card company and includes three detailed charges 710, 712 and 714. The check for dispute indicator 742 indicates that digital paper dispute boxes 732, 734 and 736 are used to dispute the charges in the respective row. The total indicator 720 indicates the total amount due of 50.00 dollars and a due date of January 1, 2004. The sign to pay indicator 740 indicates that the user should sign the digital paper signature box 730 to authorize and initiate bill payment. If a user disputes a charge, the total to pay is reduced by that amount before the system processes the bill payment request.

In an alternative embodiment, a change of address check box is used with a change of address digital paper input box. The payment system uses handwriting Optical Character Recognition (OCR) to recognize the new address and sends the information to the biller in the requested form, whether by letter or electronically using email or another electronic address updating system.

In yet another alternative, the digital paper bill may be used to signal a customer support request. For example, a request customer service digital paper check box is used to request a call from customer service. The intermediary system may generate an automated telephone call or send an email or other request as directed by the biller preferences. In yet another alternative, the consumer may prefer to write a digital paper check for payment. The consumer may use preprinted digital paper checks or may print digital paper checks on demand.

Referring to FIG. 8, an illustrative aggregate digital paper bill 800 according to another illustrative embodiment of the present application is shown.

Multi-vendor consolidated statements may be sent to customers. The customers are provided the option of paying on a line-by-line basis or the option of paying the designated total amount to the appropriate vendors with one click of the pen.

In consolidated bill 800, a vendor column 810 is provided. Additionally, a bill summary data column 822 includes the total amount due. Similarly, a due date column 820 provides the due date for each bill listed. In the illustrative embodiment, bill 812 is a 50.00 dollar telephone bill that is due January 1, 2004. Bill 814 is a 75.00 dollar cellular telephone bill due January 8, 2004. Bill 816 is an 80.00 dollar electric utility bill due January 10, 2004. A check to pay indicator 840 informs the consumer that digital pen box column 830 is used to authorize a bill payment. In this embodiment, a check to confirm indicator 842 instructs the consumer to check the second box within an appropriate length of time such as 10 seconds of the first check to confirm. If the consumer checks the digital paper box in column 832 in the specified time, the payment transaction will be processed. Otherwise, the payment transaction will not be processed until both boxes are checked in the appropriate time window.

A total bills row 818 is provided for accepting payment instructions for all bills presented in the consolidated bill statement. The due date shown is the earliest bill due date. In an alternative, if an all bills payment indication is received, each individual bill payment is not processed until the due date for that particular bill.

After the confirmation check, the digital pen will receive an indication that the payment was processed and will vibrate. Additionally, a receipt will be sent to the co-located cellular phone as a text message. A notes column 850 is provided so that the consumer may write in the date paid or other information for record keeping purposes.

In an alternative embodiment, the collocated processor, such as the cellular telephone, may be used to prompt for payment confirmation. The intermediary receives the digital pen data and then uses the cellular telephone to confirm the payment request using known challenge-response techniques.

The physical bill envelope may also include digital paper inserts, ads, coupons, and other material. Digital paper coupons can be immediately credited to the user's account when the user checks the appropriate digital paper box. Additionally, ads maybe used to orders product and services directly using the digital paper.

In an alternative, the user may write in a payment amount using the digital pen in a digital paper box. The payment system uses handwriting Optical Character Recognition (OCR) to recognize the appropriate amount. Furthermore, the recognized amount is compared to an expected range as a quality control check before processing.

In another alternative, the entire bill may be printed with digital paper that is generic to the application. A relatively small unique Anoto pattern is provided to uniquely identify the particular bill being used. In yet another alternative, a signature box may be included for capturing digitized signatures. The signatures may be stored with the bill payment transaction record for future reference. Alternatively, a consumer may utilize a digital paper electronic checkbook to process payment of a particular bill. Typically, the consumer would receive such a checkbook from her bank when signing up for the Anoto service.

In another alternative embodiment, the bill is printed using only generic Anoto pattern and includes a traceable code that is used by the consumer to identify the particular bill. In this system, a pin code is used to ensure that the proper user is accessing the system.

In an alternate embodiment, a community digital pen that is not used exclusively by one consumer is used with the billing system. The user may borrow the pen at her local post office or library. Similarly, she may borrow the pen from a postal carrier. The unique digital paper of the bill and the user PIN entered with the co-located processor provide authentication.

The illustrative embodiments described herein utilize a cellular telephone or personal computer docking station. However, docking could be accomplished with another appropriate processor such as a PC, PDA, laptop or with a special purpose device plugged with a modem plugged into the phone line. Similarly, the Chatpen may include a cellular or other communications link for direct communications with the billing infrastructure. For example, Wi-Fi enabled wireless systems may be utilized such as the Toshiba e740 Pocket PC.

Furthermore, differing types of processors and logic systems may be supported. For example, JAVA based PALM OS devices may be utilized. The banking, intermediary, billing and communications processing logic, security logic, user interface logic, communications logic and other logic could be provided in JAVA format or in a format compatible with individual platforms such as WINDOWS XP, WINDOWS CE and PALM OS.

Alternatively, other digital pen systems may be used including the LOGITECH IO pen system from Logitech of Freemont, California, the N-SCRIBE system available from Digital Ink of Wellesley, MA and the E-PEN system available from E-Pen InMotion of Matam, Haifa Israel. A digital pointing device includes the V-PEN system available from OTM Technologies of Herzliya Israel. In such alternatives, the digital paper bill is associated with the pen using traced codes printed on the digital paper.

## Claims

1. A method for presenting a digital paper bill comprising:
receiving data relating to a bill from a merchant;
associating a digital paper pattern with the bill; and
providing a digital paper bill representation of the bill to a consumer.

2. The method of claim 1, further comprising:
receiving a payment request from the consumer, wherein the consumer uses a digital pen to process the payment request;
authenticating the payment request; and
processing a bank payment request from a bank in order to process the payment request.

3. The method of claim 2, further comprising:
requesting a funds availability determination from the bank relating to the payment request; and
obtaining a consumer payment preferences record used for processing the bank payment request.

4. The method of claim 3, further comprising:
receiving a payment processed notice from the bank relating to the payment request; and
sending a payment processed receipt to the consumer related to the payment processed notice.

5. The method of claim 2, wherein,
the digital paper comprises a unique Anoto pattern;
the payment request includes an indication that the consumer used the digital pen to check an Anoto pattern box; and
the data relating to a bill includes XML formatted data.

6. The method of claim 2, wherein,
the digital paper comprises a generic Anoto pattern and a payment check box including a unique Anoto pattern.

7. The method of claim 2, wherein,
the payment request includes an indication that the consumer used the digital pen to write a payment amount in an Anoto pattern box.

8. The method of claim 2, wherein,
the payment request includes an indication that the consumer used the digital pen to check a payment dispute Anoto pattern box.

9. A method for presenting a digital paper consolidated bill comprising:
receiving data relating to a bill from each of a plurality of merchants, each bill including bill data and bill summary data;
associating a digital paper pattern with a consolidated bill, wherein the consolidated bill includes bill summary data for each bill; and
providing a digital paper bill representation of the consolidated bill to a consumer.

10. The method of claim 9, wherein,
the payment request includes an indication that the consumer used the digital pen to check an Anoto pattern box indicating a request to pay all bills.
